# EUROPÄISCHE PATENTSCHRIFT

(11) **EP 0 703 362 B1**
(45) Veröffentlichungstag und Bekanntmachung des Hinweises auf die Patenterteilung: **27.01.1999**
(21) Anmeldenummer: 95112248.0
(22) Anmeldetag: 03.08.1995
(51) Int. Cl.: F02M 65/00, F02M 61/16

(54) **Verfahren zur Einstellung und Überprüfung des Durchflusses bei Ventilen**
Process for setting and checking flow in valves
Procédé de réglage et de vérification de débit de soupapes

(30) Priorität: 20.09.1994 DE 4433543
(43) Veröffentlichungstag der Anmeldung: 27.03.1996
(73) Patentinhaber: Sonplas GmbH, 94315 Straubing (DE)
(72) Erfinder: Frankl, Herbert, Dipl.-Ing., D-94315 Straubing (DE); Ludwig, Christian, Dipl.-Ing., D-94436 Simbach (DE); Raith, Rudolf, D-94327 Bogen (DE)
(74) Vertreter: Heim, Hans-Karl, Dipl.-Ing.

(56) Entgegenhaltungen:
- EP-A- 0 301 381
- EP-A- 0 509 455
- FR-A- 2 319 024
- GB-A- 2 058 915
- US-A- 4 041 778
- PATENT ABSTRACTS OF JAPAN vol. 6 no. 157 (M-150) ,18.August 1982 & JP-A-57 073853 (OVAL ENG CO LTD) 8.Mai 1982,
- PATENT ABSTRACTS OF JAPAN vol. 11 no. 140 (M-586) ,8.Mai 1987 & JP-A-61 277869 (DIESEL KIKI CO LTD) 8.Dezember 1986,

## Beschreibung

Die Erfindung betrifft ein Verfahren zur Einstellung und Überprüfung des Durchflusses bei Ventilen, insbesondere bei Einspritzventilen für Verbrennungsmotoren, bei dem das Ventil in einer Meßvorrichtung angeordnet und mit einem Fluid bei vordefiniertem Volumenstrom beaufschlagt wird und bei dem der sich einstellende Druck des Fluides in der Meßvorrichtung ermittelt wird.

Einspritzventile dienen in der Motorentechnik der genau dosierten Zuführung von Treibstoff. Insbesondere bei Kraftfahrzeugen werden besonders hohe Anforderungen an Einspritzventile bezüglich einer mengenmäßig sehr präzisen Zuführung von Treibstoff gestellt, um eine möglichst gute und vollständige Verbrennung des Treibstoffes in dem Motor zu erreichen. Dies ist insbesondere deswegen notwendig, um die strengen Vorgaben hinsichtlich von Abgaswerten und Motorwirkungsgrad zu erreichen und einzuhalten.

Bei der Fertigung von Einspritzventilen ist es bekannt, diese am Schluß des Fertigungsprozesses bezüglich Ihres Durchflusses zu überprüfen und genau einzustellen. Hierzu wird eine Meßvorrichtung verwendet, in der das darin angeordnete Einspritzventil mit einem Test fluid unter einem bestimmten Druck beaufschlagt wird. In der Meßvorrichtung wird der Volumenstrom, auch Durchfluß genannt, durch das Einspritzventil geleitet. Der ermittelte Durchflußwert wird anschließend mit dem Soll-Durchfluß des Einspritzventiles verglichen.

Ergibt sich hierbei eine Differenz zwischen dem Ist- und dem Soll-Wert, wird der Öffnungsmechanismus des Einspritzventiles derart verstellt, daß sich die Öffnungszeit des Ventiles und somit dessen Durchfluß verändert. Der Meßzyklus wird anschließend wiederholt, wobei erneut ein Fluid unter einem konstanten Druck durch das Ventil geleitet und der sich einstellende Durchfluß von einem Durchflußsensor gemessen wird. Sollte sich dann immer noch eine Differenz zwischen dem Ist- und dem Soll-Wert ergeben, so wird der zuvor beschriebene Einstell- und anschließende Meßvorgang solange wiederholt, bis der Ist-Wert den Soll-Wert oder zumindest einen Soll-Wertbereich erreicht.

Im Regelfall ist für die Einstellung eines Einspritzventiles eine Zeit zwischen 60 und 80 Sekunden notwendig. Auf Meß- und Stabilisierungszeiten entfallen hierbei ca. 60 bis 75 % des gesamten Prüf- und Einstellvorganges.

Ein wesentlicher Grund für die langen Meßzeiten liegt bei den Durchflußmeßgeräten. Es werden hierbei üblicherweise kontinuierlich messende Durchflußmeßgeräte auf Volumenzählerbasis verwendet, beispielsweise Durchflußmeßturbinen oder Zahnradpumpen. Diese Meßmittel liefern eine der Durchflußmenge entsprechende Anzahl von Impulsen, welche von einer geeigneten Zähleinrichtung innerhalb einer festen Zeitspanne (Gatetime) aufaddiert werden. Das heißt, man bekommt einen Volumenstrommeßwert, der als Impulse pro Zeiteinheit definiert werden kann.

Um mit diesen Volumenzählern ausreichend genaue Ergebnisse zu erreichen, sind im allgemeinen Meßzeiten zwischen 3 und 10 Sekunden je Meßvorgang notwendig. Die jeweiligen Meßzeiten sind abhängig von der Durchflußmenge sowie vom Aufbau des Fluidkreislaufes.

Derartige Durchflußmeßgeräte sind relativ kompliziert aufgebaut und in ihrer Anschaffung teuer. Zudem können aufgrund des integrierenden Meßverfahrens instabile Einspritzventile nicht erkannt werden. Insgesamt ist das herkömmliche Prüf- und Einstellverfahren für Einspritzventile relativ zeitaufwendig, wodurch die Kapazität einer Meß- und Einstellvorrichtung auf 40 bis 60 Einspritzventile pro Stunde begrenzt ist. Hieraus ergibt sich ein entsprechend hoher Anlagenkostenanteil je Einspritzventil. Zur Fertigung großer Stückzahlen ist eine relativ hohe Anzahl von Meßvorrichtungen notwendig, was einen entsprechend hohen Investions- und Flächenbedarf erfordert.

Ein Verfahren gemäß Oberbegriff von Anspruch 1 ist aus der US-A-4 041 778 bekannt.

Aus der DE 41 23 787 A1 sind ein Brennstoffeinspritzventil und ein Verfahren zur Einstellung eines Brennstoffeinspritzventils bekannt, wobei die vom Ventil während des stationären Öffnungszustandes des Brennstoffventiles statische abgegebene Brennstoffmenge dadurch eingestellt wird, daß in einem ersten Verfahrensschritt an einem fertig montierten Brennstoffventil die Istmenge des abgegebenen Brennoffs bei vollständig geöffnetem Brennstoffeinspritzventil gemessen und mit einer vorgegebenen Sollmenge verglichen wird und daß in einem zweiten Verfahrensschritt der freie Strömungsquerschnitt einer Drosseleinrichtung solange verändert wird, bis die abgegebene Istmenge dem vorgegebenen Sollwert des Brennstoffs entspricht. Hier sind zwei zeitlich aufeinanderfolgende Arbeitsschritte notwendig, bei denen jeweils ein Volumen gemessen wird und wobei der momentane Volumenstrom und der momentane Druck unbekannt bleiben.

Aus der DE 37 23 698 A1 ist ein Verfahren zur Herstellung eines Kraftstoffeinspritzventils bekannt, wobei ein mit mehreren Abspritzöffnungen versehenes Bauteil in Gestalt Plättchens vorgesehen ist, in welchem die Abspritzöffnungen durch Erodieren ausgebildet werden und das Einstellen der statischen Durchflußmenge durch die Abspritzöffnungen durch Hydroschleifen der Abspritzöffnungen, d.h. durch Spülung der Abspritzöffnungen mit einem fließfähigen Schleifmittel, vorgenommen wird. Dieses Verfahren wird vor der Montage des Ventils einmalig vorgenommen und ist nicht zur Ventileinstellung während des Gebrauchs des Ventils im Motor verwendbar.

Aus der DE 33 28 044 A1 ist eine Vorrichtung zur Einstellung einer Mehrzahl von Einspritzaggregaten, insbesondere von Einspritzventilen für Mehrzylinder-Dieselmotoren bekannt. Diese bekannte Vorrichtung wird zur Einstellung der Einspritzventile an den Motor an entsprechender Stelle angebaut und nach Einstellen einer optimalen Grundeinstellung wieder entfernt. Die Güte dieser Grundeinstellung wird über das Feststellen eines möglichst runden Lehrlaufes des Motors bestimmt.

Aus der EP 05 09 455 A1 ist eine Vorrichtung zur Erzeugung eines Präzisions-Flüssigkeitsflußes, insbesondere zum Testen von Einspritzventilen, bekannt. Bei dieser bekannten Vorrichtung, welche der zeitlich mittelnden Qualitätskontrolle bei Einspritzventilen dient, wird der Flüssigkeitsdruck über den Flüssigkeitsfluß als Meßgröße genau und zeitlich konstant eingestellt. Die Einstellung des Ventiles bzw. die entsprechende Qualitätskontrolle des Ventiles findet im nicht montierten Zustand des Ventiles statt.

Der Erfindung liegt die **Aufgabe** zugrunde, ein Verfahren zu schaffen, mit dem der Durchfluß bei Ventilen sowohl besonders genau als auch mit einem relativ geringem Zeitaufwand geprüft und/oder eingestellt werden kann.

Die Aufgabe wird erfindungsgemäß durch ein Verfahren mit den kennzeichnenden Merkmalen des Anspruchs 1 gelöst. Vorteilhafte Weiterbildungen der Erfindung sind in den Unteransprüchen ausgeführt.

Das erfindungsgemäße Verfahren besteht darin, daß eine Einstelleinrichtung am Ventil entsprechend dem ermittelten Druckwert solange verstellt wird, bis der Ist-Druck einem Soll-Druck entspricht. Dem definierten Durchfluß stellt sich ein Einspritzventil in der Meßanordnung wie ein veränderbarer Widerstand entgegen, der je nach Einstellung den Momentandruck des Fluides erhöht oder erniedrigt. Die durch die Ventilverstellung erzeugte Druckänderung stellt sich nahezu verzögerungsfrei ein. Eine Abweichung vom Soll-Druck kann durch einfach aufgebaute und relativ preiswerte Drucksensoren sehr genau ermittelt werden. Durch das sofortige Ansprechen des Drucksignals kann die für die Einstellung benötigte Zeit erheblich gesenkt werden. Da sich eine Druckschwankung nahezu unverzögert einstellt, ist es zudem möglich, auch instabile Ventile während der Überprüfung oder der Einstellung zu erkennen und auszusondern.

Das erfindungsgemäße Verfahren besteht weiterhin darin, daß der eingestellte Volumenstrom des Fluides dem Soll-Durchfluß des Ventiles entspricht. Durch ein Verstellen einer am Einspritzventil vorgesehenen Einstelleinrichtung entsprechend dem momentan ermittelten Druckwert kann durch Veränderung der Öffnung des Ventiles der Fluiddruck verändert werden. Der Volumenstrom bleibt während des Meß- und Einstellvorganges konstant. Durch entrechendes Verstellen der Einstelleinrichtung kann somit in einem Meßzyklus, d.h. während einer einzigen Durchströmung des Ventiles der Druckabfall am Ventil solange eingestellt werden, bis sich ein vorgegebener Soll-Druck einstellt. Auf diese Weise kann eine besonders hohe Reduzierung der Prüf- und Einstellzeit des Ventiles erreicht werden.

Gemäß einer anderen erfindungsgemäßen Ausführungsform ist es vorteilhaft, daß ein Meßsignal des ermittelten Druckwertes als Steuersignal für eine Stelleinrichtung zur Verstellung der Einstelleinrichtung am Ventil verwendet wird. Die Stelleinrichtung wird hierbei proportional zu der ermittelten Druckdifferenz betätigt. Es entsteht hierbei ein sehr kurzer Regelkreis, mit dem der Soll-Wert des Einspritzventiles besonders genau einstellbar ist.

Dabei ist es vorteilhaft, daß als Stelleinrichtung ein Schrittmotor, ein induktives oder ein kapazitatives Stellorgan verwendet wird.

Bei einer anderen Weiterbildung der Erfindung ist es vorteilhaft, daß die Einstelleinrichtung eine Feder aufweist, deren Vorspannung durch die Stelleinrichtung reguliert wird. Die Feder ist hierbei als Bauteil des Einspritzventiles vorgesehen. Nach Veränderung der Federspannung, insbesondere der Federvorspannung, ist die eingestellte Federvorspannung dem Einspritzventil fest eingeprägt. Das Einspritzventil ist somit auf den Soll-Durchfluß fest eingestellt.

Eine vorteilhafte Ausgestaltung der Erfindung besteht darin, daß die Feder der Einstelleinrichtung auf den Öffnungsmechanismus des Ventils einwirkt, wobei eine Erhöhung der Federspannung eine Verlängerung der Öffnungszeit und eine Verringerung des Durchflusses bewirkt. Hierdurch ist ein besonders zuverlässiges Einstellen des Einspritzventiles möglich.

Eine vorteilhafte Weiterbildung der Erfindung besteht zudem darin, daß die Feder anfangs mit einer zu geringen Vorspannung versehen ist. Die Stelleinrichtung in der Meßvorrichtung kann dabei in einfacher Weise so ausgelegt werden, daß diese nur ein Spannen der Feder bewirkt. Hierdurch wird eine besonders einfach aufgebaute und kostengünstige Meßund Einstellvorrichtung geschaffen.

Zur Überprüfung ist es möglich, daß sich der Volumenstrom des Fluides zeitlich ändert, daß der eingestellte Volumenstromwert zu dem Zeitpunkt, an dem der Momentan-Druck dem Soll-Druck entspricht, mit dem Soll-Durchfluß verglichen wird. Der Volumenstrom stellt dabei einen zeitlich veränderlichen Volumenstrom dar. Durch Ermittlung des Zeitpunktes bei dem der Soll-Druck des Einspritzventiles erreicht wird, kann ermittelt werden, welcher Durchflußwert im Einspritzventil gegeben ist. Die Vorrichtung kann somit auch als ein Durchflußmeßgerät zur Überprüfung von Einspritzventilen verwendet werden.

Weiterhin kann bei einer Abweichung des Volumenstromwertes vom Soll-Durchfluß die Einstelleinrichtung entsprechend einer vorgegebenen Verstellfunktion verstellt werden. Die Verstellfunktion gibt an, wie das Ventil bei einer ermittelten Druckabweichung zu verstellen ist, damit der Soll-Druck erreicht wird. Die Verstellfunktion wird hierbei zuvor experimentell oder theoretisch für das Einspritzventil bestimmt und in eine Recheneinheit eingegeben, welche entsprechend der Abweichung des Volumenstromwertes die Einstelleinrichtung verstellt. Als Verstellfunktion kann insbesondere die physkikalische Gleichung Q = k p^{0,5} verwendet werden, welche näherungsweise einen Zusammenhang zwischen dem Durchfluß Q und dem Druck p beschreibt. Die ventilabhängige Konstante k kann hierbei experimentell bestimmt werden.

Durch die Verwendung einer derartigen Verstellfunktion, kann insbesondere bei kleinen Abweichungen vom Sollwert (+/- 5 %) in einem Meßvorgang eine genaue Ventileinstellung durchgeführt werden.

Eine vorteilhafte Ausgestaltung der Erfindung besteht darin, daß der definierte Volumenstrom durch einen Flußgenerator erzeugt wird, der einen Verdrängungskolben und einen Schrittmotor aufweist. Ein konstanter Durchfluß wird durch den vom Schrittmotor angetriebenen Kolben erzeugt, der in einem hochpräzisen Zylinder läuft. Durch die Vorgabe einer Schrittfrequenz wird eine Kolbengeschwindigkeit erzeugt, welche die im Zylinder befindliche Flüssigkeit verdrängt. Die verdrängte Menge entspricht exakt dem einzustellenden Soll-Durchfluß des Einspritzventils. Zur Erzeugung eines zeitlich veränderlichen Durchflusses wird entsprechend die Kolbengeschwindigkeit verändert.
Der definierte Volumenstrom kann hierdurch mit einer sehr großen Genauigkeit eingestellt werden.

Gemäß einer weiteren Ausführungsform der Erfindung ist es vorteilhaft, daß die Temperatur des Fluides in der Meßvorrichtung eingestellt wird. Hierbei wird berücksichtigt, daß sich bei der Temperatur auch Druck und Volumen des Fluides verändern. Durch eine genaue Einstellung der Temperatur, vorteilhafterweise auf einen Wert entsprechend der normalen Betriebstemperatur wird das Einspritzventil besonders genau eingestellt.

Weiterhin ist es erfindungsgemäß vorgesehen, daß Benzin als Fluid verwendet wird. Hierdurch wird in der Meßvorrichtung eine Meßbedingung geschaffen, die den Betriebsbedingungen des Einspritzventiles besonders nahe kommt.

Eine vorteilhafte Weiterbildung der Erfindung besteht zudem darin, daß der Flußgenerator, das Ventil und ein Drucksensor funktionsmäßig nahezu starr miteinander verbunden sind, so daß das Ventil möglichst verzögerungsfrei eingestellt wird. Das Fluid zwischen dem Flußgenerator, dem Einspritzventil und dem Drucksensor ist nahezu volumenunveränderlich. Durch diese starre funktionsmäßige Kopplung stellt sich jede durch die Ventilverstellung verursachte Druckabweichung praktisch verzögerungsfrei ein. Dies ermöglicht ein sehr genaues Einstellen des Einspritzventiles.

Eine vorteilhafte Weiterbildung der Erfindung besteht zudem darin, daß das Fluid in einem Kreislauf geführt ist. Hierdurch wird eine besonders fluidsparende Vorrichtung geschaffen.

Bei einer anderen Ausführungsform der Erfindung ist vorteilhafterweise vorgesehen, daß die ermittelten Meßwerte von einem Rechner verarbeitet werden, der zur Steuerung der Aktoren der Meßvorrichtung insbesondere der Stelleinrichtung und des Flußgenerators, dient. Durch einen Rechner, insbesondere einen PC, kann eine besonders schnelle Verarbeitung der Meßdaten durchgeführt werden.

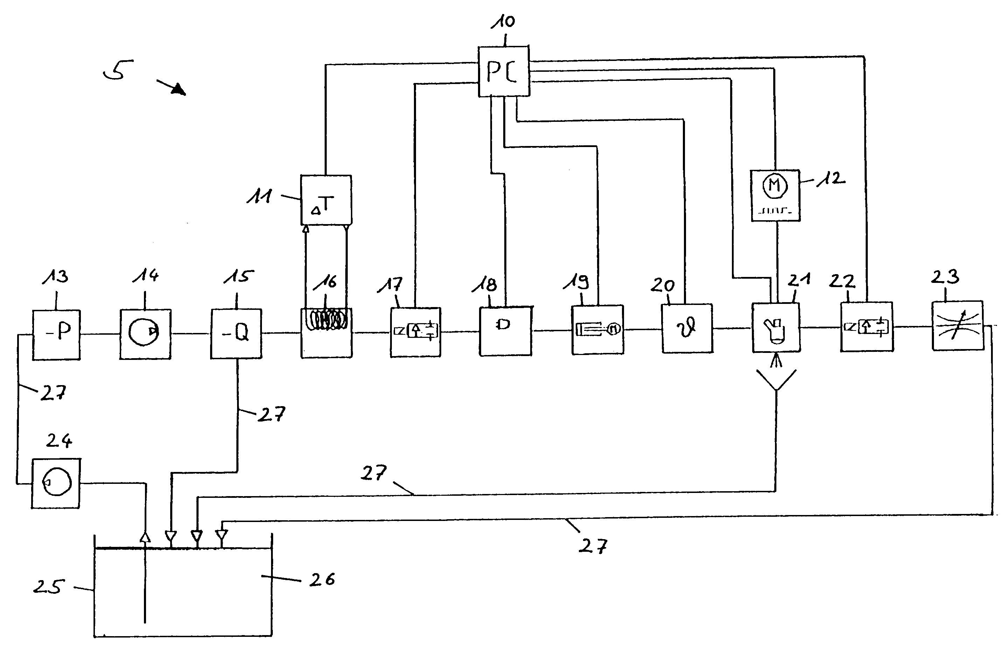

Die Erfindung wird anhand eines Ausführungsbeispieles weiter erläutert, welches stark schematisiert in einer einzigen Zeichnung dargestellt ist. In der Zeichnung ist eine erfindungsgemäße Meßeinrichtung 5 mit einem Hydraulikkreislauf für die Einstellung von Einspritzventilen 21 als Prinzipschaltbild dargestellt.

Von einer Pumpe 24 wird ein Fluid 26, welches in der Regel ein Testbenzin ist, aus einem Tank 25 über einen Druckminderer 13 einer Kraftstoffpumpe 14 zugeführt. Die Kraftstoffpumpe 14 erzeugt hierbei den notwendigen Druck in dem Kreislauf. Überschüssiges Testbenzin wird von einem Abriegelventil 15 zum Tank 26 zurückgeleitet. Das für die Einstellung benötigte Fluid 26 wird in einem Gegenstromwärmetauscher 16 stabilisiert. Der Wäremtauscher 16 wird dabei von einem Temperierbad 11 versorgt, welches über die Regelung in einem Rechner 10, beispielsweise einem PC, auf Raumtemperatur eingestellt wird.

Bei geöffneten Absperrventilen 17 und 22 ist ein Durchfluß im Kreis vorhanden, der lediglich von einer Drossel 23 begrenzt wird. Diese Einstellung ist als Grundeinstellung des Kreislaufes zu betrachten. In dieser Einstellung wird ein Flußgenerator 19 aufgefüllt. Mit dem Beginn der Einstellung des Einspritzventiles 21 werden die Absperrventile 17 und 22 geschlossen, wobei gleichzeitig der Flußgenerator 19 eingeschaltet wird.

Hierdurch wird ein konstanter Volumenstrom generiert, der dem einzustellenden Einspritzventil 21 eingeprägt wird und der dem einzustellenden Soll-Durchfluß entspricht. Der Durchfluß wir durch einen Schrittmotor getriebenen Kolben erzeugt, der sich in einem mit dem Prüffluid 26 gefüllten Zylinder befindet. Mit den geometrischen Abmessungen des Kolbens läßt sich die Kolbengeschwindigkeit errechnen, welche zur Generierung des gewünschten Durchflusses benötigt wird. Diese Geschwindigkeit wird dem Schrittmotor des Flußgenerator 19 vorgegeben, der diese mit ausreichend gutem Gleichlauf einhält. Der Schrittmotor weist hierbei insbesondere eine Synchronmotor-Charakteristik auf, wodurch eine konstanter Volumenstrom erzeugt wird. Durch zusätzliche Ventile kann der Kolben auch im Reversierbetrieb betrieben werden, d.h. eine Seite des Kolbens wird entleert, während die andere gleichzeitig gefüllt wird.

Das einzustellende Ventil 21, welches normalerweise mit einer zu wenig gespannten Feder in die Meßund Einstellvorrichtung 5 gelangt, hat einen über dem Volumenstrom liegenden Durchfluß, wodurch eine Reduzierung des Arbeitsdrucks bewirkt wird. Diese Reduzierung des Arbeitsdruckes wird mit einem Drucksensor 18 erfaßt und vom Rechner 10 eingelesen. Dieser Meßwert wird als Ausgangsgröße für die Berechnung der Schritt frequenz für den Schrittmotor 12 verwendet, der die Feder im Einspritzventil 21 vorspannt. Die veränderte Federspannung bewirkt eine Änderung des Durchflusses und damit eine Änderung des Druckes. Diese Änderungen werden vom Rechner 10 eingelesen und in Schrittfrequenzen umgerechnet, bis der Druck innerhalb einer engen Toleranz vom Soll-Druck liegt. Nach Erreichen der Toleranzgrenzen kann das Einspritzventil 21 verkerbt werden.

Nach dem Verkerben kann der Hydraulikkreis, der mehrere Fluidleitungen 27 aufweist, wieder in Grundstellung gebracht werden, so daß der Flußgenerator erneut aufgefüllt werden kann.

Anschließend kann nach dem Verkerben der Flußgenerator 19 zur Kontrolle der Ventileinstellung eingesetzt werden. Der Flußgenerator 19 wird dabei mit einer variablen Geschwindigkeit betrieben, wobei die Kolbengeschwindigkeit solange verändert wird, bis sich am Drucksensor 18 der gewünschte Soll-Druck einstellt. Wird zu diesem Zeitpunkt auch der Soll-Durchfluß vom Flußgenerator 19 erzeugt, ist das Einspritzventil 21 richtig eingestellt.

Zur Überprüfung der Meß- und Einstellvorrichtung 5, beispielsweise bezüglich der hohen Anforderungen von DIN/ISO 9000 kann zusätzlich eine hochgenaues Durchflußmeßgerät zur Eichung und Überprüfung der Vorrichtung 5 eingesetzt werden. Durch das erfindungsgemäße Verfahren kann, wie gezeigt, die für die Einstellung von Einspritzventilen benötigte Zeit erheblich gesenkt werden. Dies bedeutet ein deutliche Kosteneinsparung bei der Erstellung von Produktionsanlagen durch die Verringerung der Anzahl von Einstellvorrichtungen und die Verwendung einfacherer und genauerer Drucksensoren anstelle von herkömmlichen Durchflußmessern.

## Patentansprüche

1. Verfahren zum Einstellen und Überprüfen des Durchflusses bei Ventilen, insbesondere bei Einspritzventilen für Verbrennungsmotore, mit den Schritten:
- Anordnen des Ventils (21) in einer Meßvorrichtung (5),
- Beaufschlagen des Ventils (21) mit einem vordefinierten Volumenstrom eines Fluids (26),
- Ermitteln des sich einstellenden Drucks des Fluids (26) in der Meßvorrichtung (5) und
- Verstellen einer Einstelleinrichtung am Ventil (21) entsprechend dem Wert des sich einstellenden Drucks, bis der sich einstellende Ist-Druck einem Soll-Druck entspricht,
dadurch **gekennzeichnet,**
daß während des Meß- und Einstellvorganges ein zeitlich konstanter Volumenstrom des Fluids (26) verwendet wird,
daß der Volumenstrom des Fluids (26) einem bestimmten Soll-Durchfluß des Ventils (21) entspricht, und
daß das Verstellen und Einstellen der Einstelleinrichtung am Ventil (21) bei Konstanten Volumenstrom In einem Meßzyklus während einer einzigen Durchströmung erfolgt.

2. Verfahren nach Anspruch 1,
dadurch **gekennzeichnet,**
daß ein Meßsignal des ermittelten Druckwertes als Steuersignal für eine Stelleinrichtung (12) zur Verstellung der Einstelleinrichtung am Ventil (21) verwendet wird.

3. Verfahren nach Anspruch 2,
dadurch **gekennzeichnet,**
daß als Stelleinrichtung (12) ein Schrittmotor, ein induktives oder ein kapazitatives Stellorgan verwendet wird.

4. Verfahren nach Anspruch 2 oder 3,
dadurch **gekennzeichnet,**
daß die Einstelleinrichtung eine Feder aufweist, deren Vorspannung durch die Stelleinrichtung (12) reguliert wird.

5. Verfahren nach Anspruch 3 oder 4,
dadurch **gekennzeichnet,**
daß die Feder der Einstelleinrichtung auf den Öffnungsmechanismus (21) einwirkt, wobei eine Erhöhung der Federspannung eine Verlängerung der Öffnungszeit und eine Verringerung des Durchflusses bewirkt.

6. Verfahren nach einem der Ansprüche 3 bis 5,
dadurch **gekennzeichnet,**
daß die Feder anfangs mit einer zu geringen Vorspannung versehen wird.

7. Verfahren nach einem der Ansprüche 1 bis 6,
dadurch **gekennzeichnet,**
daß der definierte Volumenstrom durch einen Flußgenerator (19) erzeugt wird, der einen Verdrängungskolben und einen Schrittmotor aufweist.

8. Verfahren nach einem der Ansprüche 1 bis 7,
dadurch **gekennzeichnet,**
daß die Temperatur des Fluides (25) in der Meßvorrichtung (5) eingestellt wird.

9. Verfahren nach einem der Ansprüche 1 bis 8,
dadurch **gekennzeichnet,**
daß Benzin als Fluid (26) verwendet wird.

10. Verfahren nach einem der Ansprüche 7 bis 9,
dadurch **gekennzeichnet,**
daß der Flußgenerator (19) das Ventil (21) und ein Drucksensor (18) funktionsmäßig nahezu starr miteinander verbunden sind, so daß das Ventil (21) nahezu verzögerungsfrei eingestellt wird.

11. Verfahren nach einem der Ansprüche 1 bis 10,
dadurch **gekennzeichnet,**
daß das Fluid (26) in einem Kreislauf geführt ist.

12. Verfahren nach einem der Ansprüche 7 bis 11,
dadurch **gekennzeichnet,**
daß die ermittelten Meßwerte von einem Rechner (10) verarbeitet werden, der zur Steuerung der Aktoren der Meßvorrichtung (5), insbesondere der Stelleinrichtung (12) und des Flußgenerator (19), dient.

## Claims

1. Method for setting and checking the flow in valves, particularly in injection valves for internal combustion engines, comprising the steps of:
- placing the valve (21) in a measuring device (5),
- subjecting the valve (21) to a predefined volume flow of a fluid (26),
- determining the ensueing pressure of the fluid (26) in the measuring device (5), and
- adjusting a setting device on the valve (21) in accordance with the value of the ensueing pressure until the ensueing actual pressure corresponds to a desired pressure,
**characterized** in that
during the measuring and adjusting procedure a volume flow of the fluid (26) is used which is constant in time, the volume flow of the fluid (26) corresponds to a determined desired flow of the valve (21), and the adjusting and setting of the setting device on the valve (21) is performed at a constant volume flow in a measuring cycle in a single flow.

2. Method according to claim 1,
**characterized** in that
a measurement signal of the determined pressure value is used as a control signal for an adjusting device (12) for adjusting the setting device on the valve (21).

3. Method according to claim 2,
**characterized** in that
a stepping motor, an inductive or a capacative adjusting member is used as the adjusting device (12).

4. Method according to claims 2 or 3,
**characterized** in that
the setting device comprises a spring, its pretension being regulated by the adjusting device (12).

5. Method according to claims 3 or 4,
**characterized** in that
the spring of the setting device acts on the opening mechanism (21), in which an increase of the spring tension causes a prolongation of the opening time and a decrease of the flow.

6. Method according to one of claims 3 to 5,
**characterized** in that
the spring is initially provided with a less pretension.

7. Method according to one of the claims 1 to 6,
**characterized** in that
the defined volume flow is produced by a flow generator (19), which has a displacement piston and a stepping motor.

8. Method according to one of the claims 1 to 7,
**characterized** in that
the temperature of the fluid is set in the measuring device (5).

9. Method according to one of the claims 1 to 8,
**characterized** in that
gasoline is used as the fluid (26).

10. Method according to one of the claims 7 to 9,
**characterized** in that
the flow generator (19), the valve (21) and a pressure sensor (18) are functionally almost rigidly interconnected,
so that the valve (21) is set with almost no delay.

11. Method according to one of the claims 1 to 10,
**characterized** in that
the fluid (26) is directed in a circuit.

12. Method according to one of the claims 7 to 11,
**characterized** in that
the determined measure values are processed by a computer (10), which is used for controlling operating means of the measuring device (5), in particular the adjusting device (12) and the flow generator (19).

## Revendications

1. Procédé de réglage et de vérification du débit de soupapes, en particulier de soupapes d'injection pour moteurs à combustion, comprenant les étapes consistant à :
- placer la soupape (21) dans un dispositif de mesure (5),
- charger la soupape (21) avec un débit volumique prédéterminé d'un fluide (26),
- déterminer la pression du fluide (26) qui s'instaure dans le dispositif de mesure (5), et
- actionner un dispositif de réglage sur la soupape (21) en fonction de la valeur de la pression s'instaurant, jusqu'à ce que la pression réelle s'instaurant corresponde à une pression de consigne,
***caractérisé en ce que,*** pendant la phase de mesure et de réglage, on emploie un débit volumique de fluide (26) constant dans le temps,
***en ce que*** le débit volumique du fluide (26) correspond à un débit de consigne de la soupape (21) et ***en ce que*** l'actionnement et le réglage du dispositif de réglage sur la soupape (21) à débit volumique constant s'effectue dans un cycle de mesure pendant un unique passage de fluide.

2. Procédé selon la Revendication 1, ***caractérisé en ce qu'***un signal de mesure de la pression déterminée est employé comme signal de commande pour un dispositif d'actionnement (12) afin d'actionner le dispositif de réglage présent sur la soupape (21).

3. Procédé selon la Revendication 2, ***caractérisé en ce qu'***on utilise comme dispositif d'actionnement (12) un moteur pas à pas, un organe d'actionnement inductif ou un organe d'actionnement capacitif.

4. Procédé selon la Revendication 2 ou 3, ***caractérisé en ce que*** le dispositif de réglage présente un ressort dont la précontrainte est réglée par le dispositif d'actionnement (12).

5. Procédé selon la Revendication 3 ou 4, ***caractérisé en ce que*** le ressort du dispositif de réglage agit sur le mécanisme d'ouverture (21), une augmentation de la tension du ressort provoquant un allongement de la durée d'ouverture et une réduction du débit.

6. Procédé selon l'une quelconque des Revendications 3 à 5, ***caractérisé en ce que*** le ressort est affecté initialement d'une faible précontrainte.

7. Procédé selon l'une quelconque des revendications 1 à 6, ***caractérisé en ce que*** le débit volumique défini est produit par un générateur d'écoulement (19) qui comporte un piston de refoulement et un moteur pas à pas.

8. Procédé selon l'une quelconque des Revendications 1 à 7, ***caractérisé en ce que*** la température du fluide (26) dans le dispositif de mesure (5) est réglée.

9. Procédé selon l'une quelconque des Revendications 1 à 8, ***caractérisé en ce qu***'on utilise de l'essence comme fluide (26).

10. Procédé selon l'une quelconque des Revendications 7 à 9, ***caractérisé en ce que*** le générateur d'écoulement (19), la soupape (21) et un capteur de pression (18) sont. du fait de leur fonction, reliés pratiquement ngidement entre eux, de sorte que la soupape (21) est réglé pratiquement sans retard.

11. Procédé selon l'une quelconque des Revendications 1 à 10, ***caractérisé en ce que*** le fluide (26) suit un circuit.

12. Procédé selon l'une quelconque des Revendications 7 à 11, ***caractérisé en ce que les*** valeurs de mesure déterminées sont traitées par un calculateur (10), qui sert à commander les acteurs du dispositif de mesure (5), en particulier le dispositif d'actionnement (12) et le générateur d'écoulement.
